# EUROPEAN PATENT SPECIFICATION

(11) **EP 3 402 728 B1**
(45) Date of publication and mention of the grant of the patent: **09.10.2019**
(21) Application number: 16798667.8
(22) Date of filing: 10.11.2016
(51) Int. Cl.: B65G 1/04, B65G 1/137, F25D 13/04

(54) **STORAGE SYSTEM WITH MULTIPLE ROBOTS**
SPEICHERSYSTEM MIT MEHREREN ROBOTERN
SYSTÈME DE STOCKAGE COMPRENANT DE MULTIPLES ROBOTS

(30) Priority: 14.01.2016 NO 20160075
(43) Date of publication of application: 21.11.2018
(73) Proprietor: Autostore Technology AS, 5578 Nedre Vats (NO)
(72) Inventor: HOGNALAND, Ingvar, 5578 Nedre Vats (NO); FJELDHEIM, Ivar, 5533 Haugesund (NO); AUSTRHEIM, Trond, 5590 Etne (NO)
(74) Representative: Onsagers AS
(86) International application number: PCT/EP2016/077300
(87) International publication number: WO 2017/121512

(56) References cited:
- EP-A1- 2 346 772
- EP-A2- 2 436 618
- WO-A1-2015/124610
- US-A- 4 088 232

## Description

### TECHNICAL FIELD

The present invention relates to the technical field of logistics and storage systems.

More specifically the invention relates to a storage system for storing items where the items are isolated from an outside environment, and even more particularly to a cooled storage system suitable for receiving and storing processed refrigerated and frozen food products waiting to be shipped to the marketplace, which comprises a first grid structure of storage cells, each storage cell being arranged to accommodate a vertical stack of storage bins, with insulated covers separating the storage cells from the top level of the grid structure.

### BACKGROUND

The present invention is an improvement upon the applicant's AutoStore ® system generally (illustrated in Fig 1) and in particular is an improvement upon applicant's prior invention disclosed in WO2015/124610 (illustrated in Figs. 2 and 3).

The Applicant's already known AutoStore® system is a storage system comprising a three dimensional storage grid containing storage bins that are stacked on top of each other to a certain height. The storage grid is constructed as aluminum columns interconnected by top rails. A number of vehicles, or robots, are arranged on the top rails. Each vehicle is equipped with a lift for picking up, carrying, and placing bins that are stored in the storage grid.

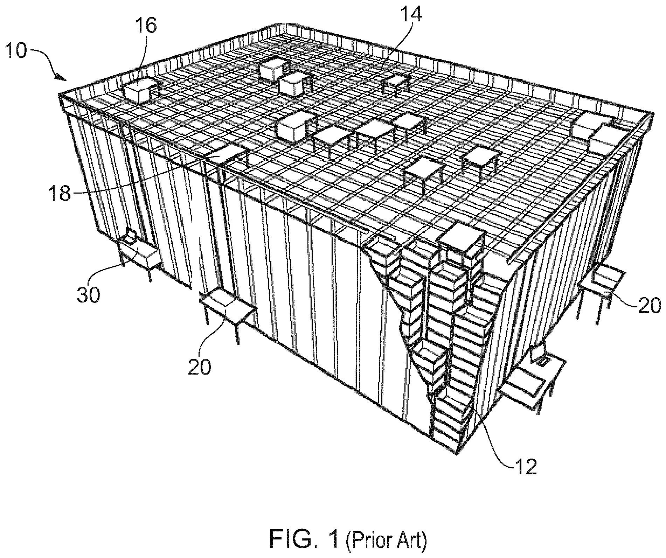

Such a storage system of the background art has been illustrated in fig. 1. The known storage system comprises a grid structure of storage cells. Each cell is arranged to accommodate a vertical stack of storage bins. The grid structure has a top level.

The known storage system further comprises a vehicle which is arranged to move at the top level of the grid structure and also arranged to receive a bin from a storage cell. The known storage system may include a plurality of such vehicles, as illustrated.

The known storage system further comprises a bin lift device. The bin lift device is arranged to receive a bin from a first vehicle at the top level of the first grid structure and to convey the bin down in a vertical direction to a delivery station, or port. The storage system may include a plurality of such lift devices and ports, as illustrated.

Todays households rely on the availability of foodstuffs that can be purchased in a refrigerated or frozen state. Between the time the food is processed and the time it reaches the marketplace, the processed food may be held in a distributor's warehouse under strictly controlled temperatures. In order to minimize the time between storage and delivery, it is a need for efficient logistic systems which can access and deliver the correct food in a minimum of time.

The system disclosed in WO2015/124610 discloses a method for retrieving items from a storage system according to the preamble of claim 1 and a storage system according to the preamble of claim 11. It describes a cooled storage system comprising multiple vehicles, arranged to move horizontally at the top level of the AutoStore ® grid structure, and a bin lift device arranged to convey a bin in a vertical direction between the top level of the grid structure and a delivery station. There is provided thermal insulation between at least a section of the grid structure and the remotely operated vehicle, and said section of the grid structure has a temperature that is lower than the temperature of the remotely operated vehicle and/or the vehicle's ambient temperature. There is provided thermally insulated covers separating the storage cells from the top level of the grid structure.

A challenge with the system described in WO2015/124610 is that the thermally insulated cover must be removed in order to retrieve bins from the cell. The cells are thus exposed to the ambient temperature as soon as the cover is removed. According to known systems, a first vehicle must first remove the insulated cover. The vehicle moves to a new location of the grid, temporarily deposits the insulated cover and then returns to retrieve a bin. Alternately, a second vehicle may be summoned from elsewhere on the grid to retrieve a bin once the first vehicle has removed the cover. This undesirable effect is exacerbated when a target bin is located at a position lower than the top level of a stack of bins. In that instance, each non-target bin is moved to a temporary location until the target bin is reached, and then must be replaced. All the time the sequential retrieving and replacing of bins is taking place, the stack of bins is open at the top, exposed to the uncooled environment. This results in thermal losses until the target bin is retrieved and the thermally insulated cover can be replaced.

While this challenge is described in relation to thermal losses from a cooled storage system, a similar challenge would exist in any grid storage system where the columns are sealed by covers for the purpose of limiting exposure of the columns to the outside atmosphere. Non-limiting examples would include storage systems where contamination of the columns by dust and the like is a concern, where the columns is ordinarily under a slight vacuum etc.

### BRIEF SUMMARY OF THE INVENTION

An object of the invention is to provide a means for retrieving bins from a sealed storage system while reducing exposure of a storage cell to the ambient environment. More particularly, an object of the invention is to avoid or at least significantly reduce thermal losses experience when a thermal cover of a cooled storage cell is removed during a bin-retrieval operation.

Said objects are achieved through the present invention demonstrating the features that are specified in the independent claims 1 and 11.

According to one aspect of the invention a cooled storage system comprises a grid structure of storage cells having a top level, where each cell is arranged to accommodate a vertical stack of storage bins in a storage cell, a plurality of remotely operated vehicle arranged to move at the top level of the grid structure and receive bins from a storage cell. The storage cells are sealed at the top by removable covers. According to one aspect, there is provided thermal insulation between at least a section of the grid structure and the remotely operated vehicle, and said section of the grid structure has a temperature that is lower than the temperature of the remotely operated vehicle.

The storage system has in one embodiment a general design as outlined in figure 1. The products to be stored are arranged in storage bins, which are arranged in the stacks of the storage system, with insulated covers arranged over the stacks. The remotely operated vehicle is adapted for picking up storage bins from the storage system and comprises in one embodiment a vehicle body comprising a first section for storing vehicle driving means and a second section with a device for lifting and receiving insulated covers and/or a storage bin stored in a stack within the storage system. A first set of vehicle rolling means connected to the vehicle body allowing movement of the vehicle along a first direction (X) within the storage system during use and a second set of vehicle rolling means connected to the vehicle body allowing movement of the vehicle along a second direction (Y) in the storage system (3) during use, the second direction (Y) being perpendicular to the first direction (X). In one embodiment the second section is an arm extending out from the vehicle body. In another embodiment the second section is an internal cavity inside the vehicle body. In one embodiment the grid structure with associated vertical stacks of storage bins, is sub-divided into a number of sections, for example two, three or more sections. The sections are separated from each other by thermal insulation such as polystyrene, insulating boards or plates, insulating mats, or other suitable insulating material. The thermal insulation constitutes a wall or thermal barrier between the sections of the grid structure, and gives the opportunity of having different temperature in the different sections of the grid structure. In one embodiment at least one of the sections is connected to a cooling unit, thus providing a cooler temperature in this/these sections.

In one embodiment the cooling unit is an evaporator. An evaporator is in this context a device which is used in an air-conditioning system to allow a compressed cooling chemical to evaporate from liquid to gas while absorbing heat in the process. The cooling chemical can for example be R-22 (Freon) or R-410A, or other suitable chemical.

The cooled storage system can further comprise a bin lift device arranged to receive a bin from a vehicle at the top level of the first grid structure and to convey the bin down in a vertical direction to a delivery station, or port. Here the content of the bin can be collected, or the complete bin may be transported to its destination.

In one embodiment the system comprises insulating covers arranged in the top level of the grid structure. The insulating covers provide a thermal barrier towards the remotely operated vehicle as well as contributing to maintaining the desired temperature in the bins in the grid structure. The insulating covers are arranged to be movable by means of the remotely operated vehicle. The vehicle can move one insulating cover to another cell in the grid, or hold it temporarily while a bin is removed from the stack.

According to one aspect, the vehicles are arranged to be controlled by a computerized control system. The vehicles are arranged with sensors that can detect the precise location of the vehicle itself, and also detect the location of nearby vehicles, and communicate that information to the control system. Such sensors may comprise lasers, sonar, LiDar or other known systems, such as for example systems employed in well known "adaptive cruise control" or autonomous driving technology from the automobile industry.

According to one aspect, when a target storage bin is to be retrieved, the control system identifies the location of the target stack containing the target bin, as well as the location of the bin within the stack. The control system then communicates with a plurality of vehicles, and commands the vehicles to form a "train" of vehicles adjacent to the target stack.

As used herein, the term "train of vehicles" is to be understood as a plurality of vehicles proximately arranged in series, and arranged to move in tandem. The term "train" may encompass vehicles that maintain their proximate relationship via control commands received from a control system, by virtue of physical couplings, by the use of onboard sensors, or any other manner known in the art.

The number of vehicles comprising the "train" may be determined by the position of the target bin within the stack. The assembly of the train is accomplished according to one aspect with help of the sensors in the vehicles, and according to another aspect by the control system's awareness of the vehicles' relative positions, or a combination of both. According to another aspect, adjacent vehicles in the train may be connected by physical couplings, or by electromagnets and the like.

When the "train" of vehicles is arranged adjacent to the target stack, the control system commands the assembled vehicles to move in tandem over the target stack. The first vehicle in the train will lift the insulated cover, alternatively both the insulated cover and the top bin in the stack. The train will then be commanded to move sequentially forward over the stack, with consecutive vehicles lifting non target bins as the train moves forward. When the target bin is reached, this is lifted into a vehicle. In this manner, the open stack is substantially at all times covered by a vehicle, which will among other advantages reduce the thermal losses from the open stack.

According to one aspect, the vehicles of the train may be equipped with a skirt extending from the body of the vehicle to the top level of the grid structure. The skirt may be arranged to be in direct physical contact with the upper level, or in a proximate, but non-touching relationship.

Once the target bin is lifted from the stack, two independent, but related operations are performed:
- the target bin will be delivered to the bin lift device for transport to the delivery station
- the non-target bins and insulated cover will be replaced.

These two operations can be performed in a number of ways. According to one aspect, the control system will command the train of vehicles to reverse direction, with the vehicles sequentially replacing non-target bins and the original cover.

According to another aspect, the train may comprise a rear vehicle that holds a new cover. According to this aspect, the train may move over the target stack in a single pass, with the rear vehicle placing its cover above the stack. The first vehicle in the train will then hold its cover until a new train is to be formed, in which case it may be commanded to form the rear vehicle in such new train. This aspect may be useful where, for example, all or several of the bins in a stack are target bins, thereby eliminating the need to reverse the train to replace the cover.

According to yet another aspect, the vehicle carrying the target bin may leave the train as soon as it lifts the bin, with the train closing the gap left by the departed vehicle, and thereafter performing the bin/cover-replacement operation while the target bin is in transit to the delivery station.

According to yet another aspect, cooled articles within the target bin are transported automatically from the delivery port to a cooled storage space by use of one or more conveyor belts.

Further possible features, including exemplary aspects, structure and operation of various embodiments; have been described in detail below with reference to the accompanying drawings. In the drawings, like reference numbers indicate identical or functionally similar elements.

### BRIEF DESCRIPTION OF THE DRAWINGS

Fig. 1 is a schematic, partly cut perspective view of a storage system according to the background art;

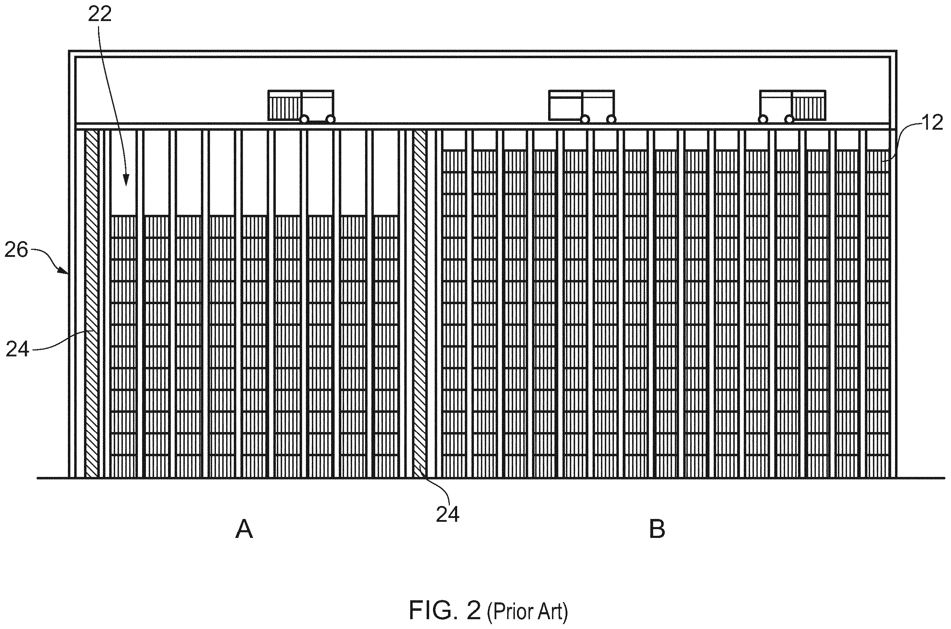

Fig. 2 is a schematic, elevational view of a cooled storage system according to the background art;

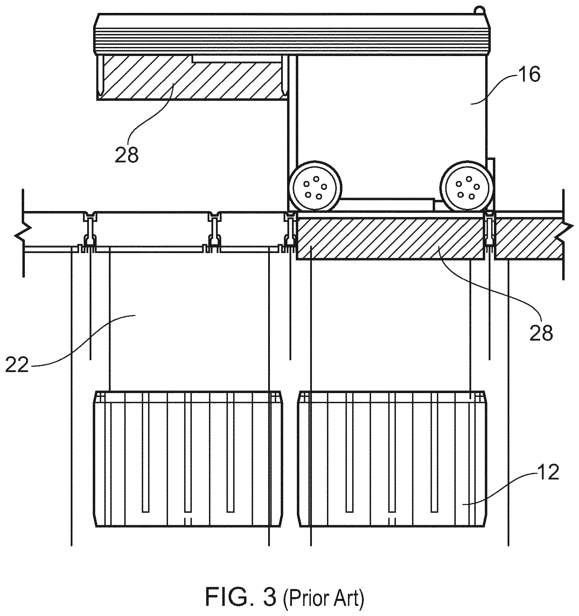

Fig. 3 is a schematic, elevational view of a remotely operated vehicle retrieving an insulated cover according to the background art;

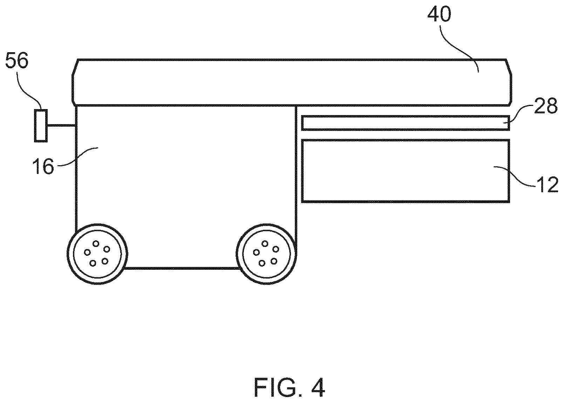

Fig. 4 is a schematic, side elevational view of a remotely operated vehicle with a lifting arm, the arm holding a cover and a bin simultaneously.

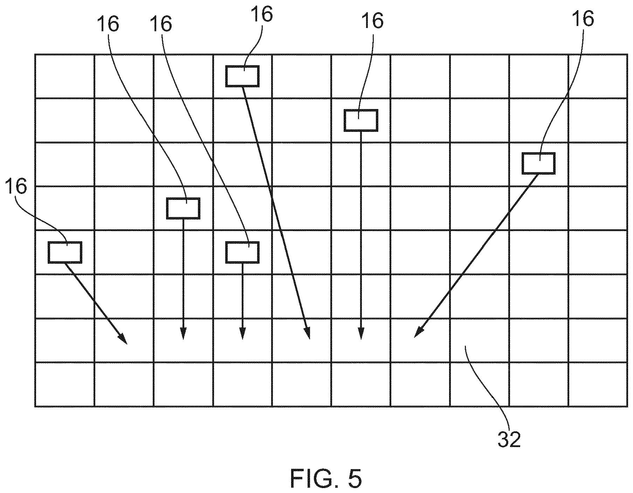

Fig. 5 is a schematic top of a grid system, illustrating the commanding by a control system of a plurality of vehicles to form a train.

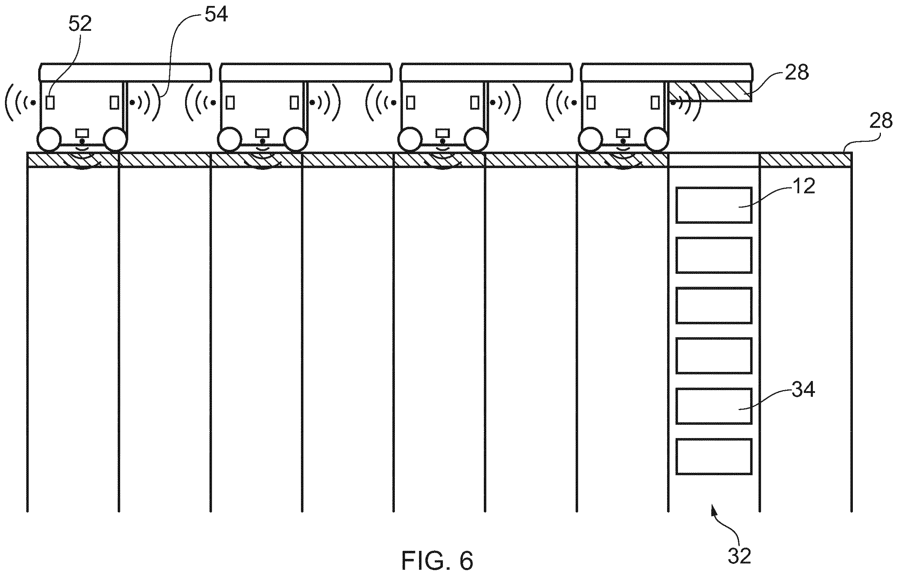

Fig. 6 is a schematic side view of a train of vehicles, the first of which has retrieved a cover;

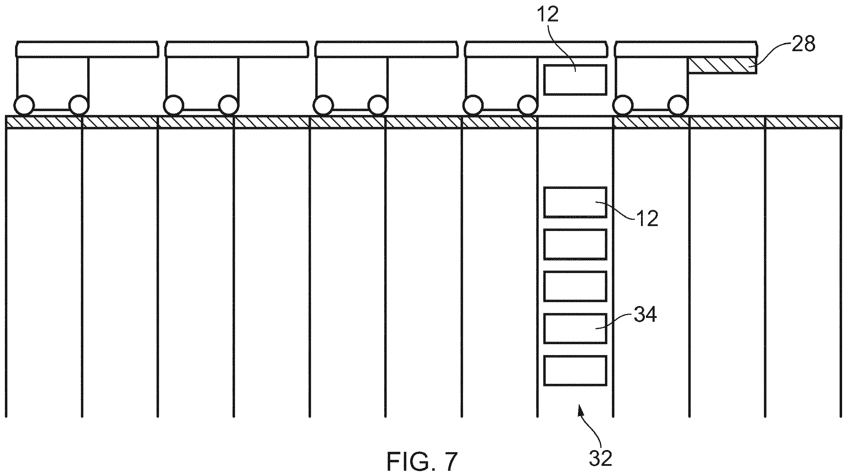

Fig 7 is a schematic side view of a train of vehicles, the second of which has retrieved a non-target bin.

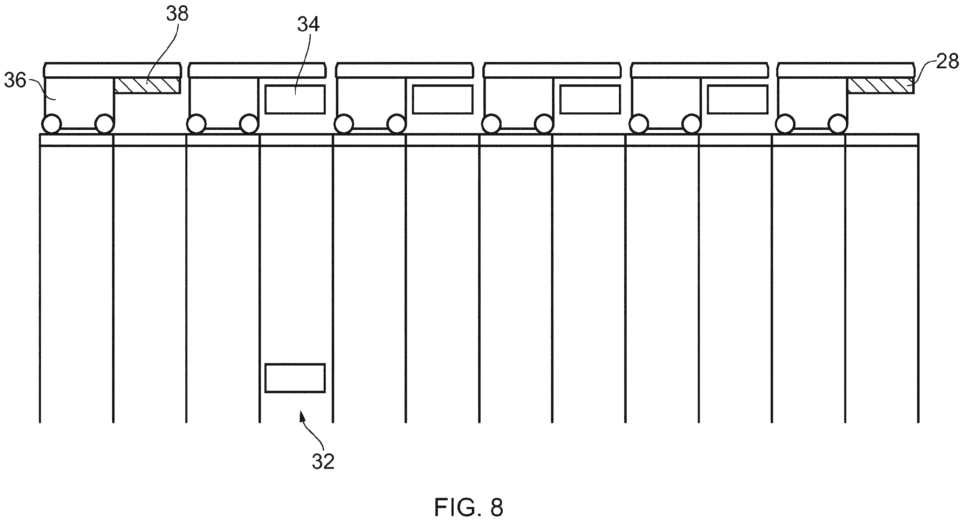

Fig 8 is a schematic side view of a train of vehicles, the fifth of which has retrieved a target bin.

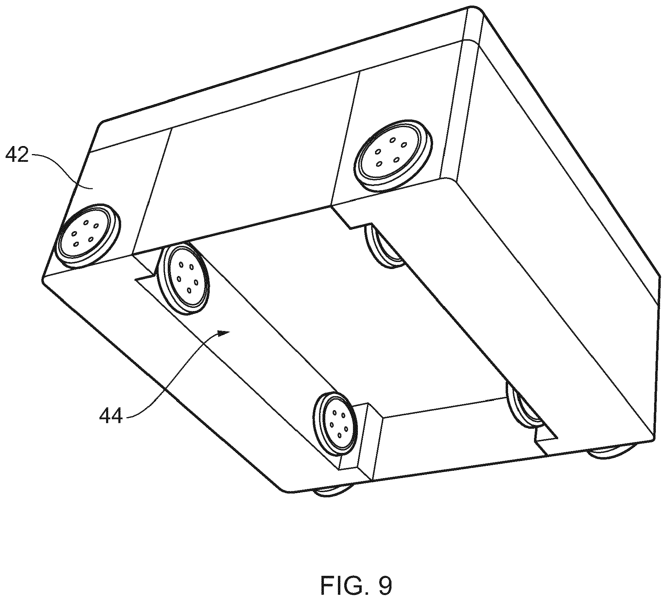

Fig 9 is a perspective view of an alternate embodiment of a remotely operated vehicle having an internal bin-receiving area.

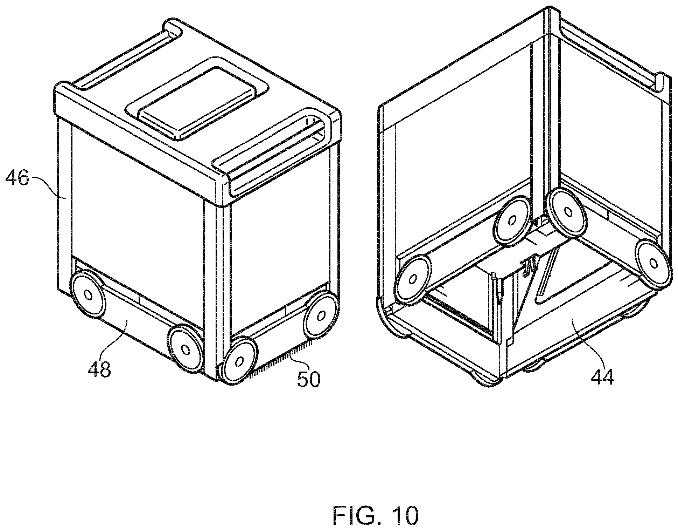

Fig 10 are perspective views of an alternate embodiment of a remotely operated vehicle having an internal cavity capable of receiving a plurality of bins

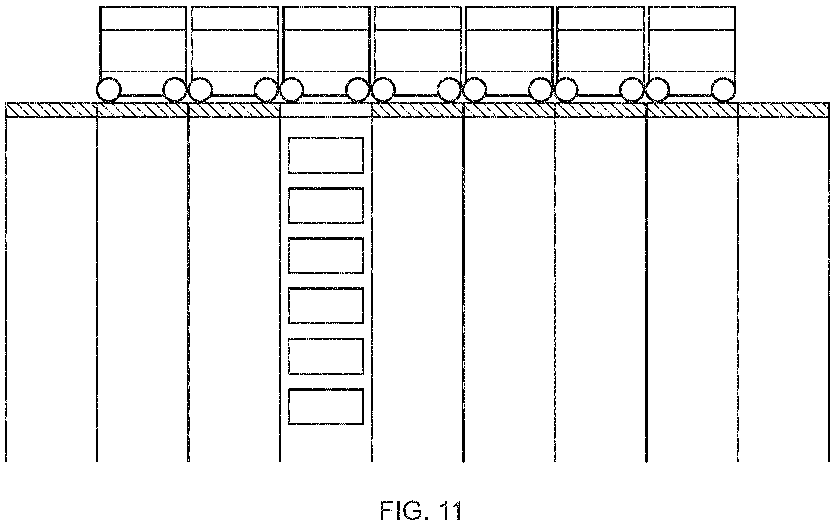

Fig 11 is a schematic side view of a train of vehicles comprised of vehicles of the type illustrated in Figs 9 or 10.

### DETAILED DESCRIPTION

As shown in Fig 1, the present invention relates to a known storage system comprising a three-dimensional storage grid 10 containing storage bins 12 that are stacked on top of each other to a certain height. The storage grid is constructed as aluminum columns interconnected by top rails 14. A number of vehicles 16, or robots, are arranged on the top rails. Each vehicle is equipped with a lift for picking up, carrying, and placing bins that are stored in the storage grid.

The known storage system further comprises a vehicle which is arranged to move at the top level of the grid structure and also arranged to receive a bin from a storage cell. The known storage system may include a plurality of such vehicles, as illustrated.

The known storage system further comprises a bin lift device 18. The bin lift device is arranged to receive a bin from a first vehicle at the top level of the first grid structure and to convey the bin down in a vertical direction to a delivery station 20, or port. The storage system may include a plurality of such lift devices and ports, as illustrated.

In particular, the present invention is directed towards an embodiment of known storage systems for storing perishable items in cooled sections, or other items that benefit from being stored in sealed areas. Non-limiting example can be items that benefit from being stored in dust-free or other types of controlled environments. As shown in Fig 2, such an embodiment comprises bins 12 arranged in cells 22. One or more sections of the system are separated by insulated walls 24 into a cooled section 26. A cooling system (not shown) maintains the desired temperature of the cooled section.

As shown in Fig 3, the cooled section further comprises a plurality of insulated covers 28 arranged above the cells 22. As can be appreciated, the covers would not necessarily have to be insulated covers where the intention of the controlled environment in the section is for a purpose other than thermal control. The vehicles 16 are arranged to lift the covers 28 from the top of the cells to provide access to the bins 12. As shown in Fig. 4, one or more of the vehicles can be arranged to lift both a cover 28 and the uppermost bin 12 simultaneously.

When a bin is to be retrieved from a cell, a computerized control system (illustrated schematically in Fig 1 by a computer terminal 30) issues various commands to the vehicles 16. The control system is further arranged to record the position of bins in the grid structure and the position of bins within a stack, to issue movement commands to the vehicles and to record position information of the vehicles.

As illustrated in Fig 5, the vehicles are ordinarily located at various random locations along the top of the grid. The control system therefore issues commands to the vehicles to form a "train", made up of a series of adjacent vehicles arranged to move in tandem. As illustrated schematically in Fig 5, the train will be formed in the vicinity of a target cell 32.

Figs 6, 7 and 8 illustrate the train of vehicles moving sequentially over target cell 32 in order to retrieve a target bin 34. The first vehicle of the train lifts cover 28 from target cell 32. Alternately the first vehicle can lift both cover 28 and the uppermost bin 12. The vehicles train then move forward in tandem, sequentially retrieving bins 12 until target bin 34 is retrieved, as seen in Fig 8.

After target bin 34 is retrieved, a cover will ordinarily be replaced above the cell. This can be accomplished by the train reversing direction, with the vehicles of the train replacing the non-target bins back in the cell, until the first vehicle arrives to replace the original cover. Alternately, a rear vehicle 36 may be arranged at the rear of the train. In this embodiment, the train may continue in the forward direction, and a new cover 38 may be replaced above the cell. This embodiment can be useful for example when all the bins in the cell are "target bins". The train can then retrieve target bins, and replace a cover in a single pass. In this event, the original cover 28 lifted by the first vehicle may be retained by that vehicle, to later be used as a "new cover 38" in a future train. It should be appreciated that by virtue of the train moving in tandem over the open cell, the bins in the cell are shielded from the outside environment by the presence of vehicles over the open top. Once the bins are collected, and in particular once the cover is replaced, the control system can order vehicles to depart the train in any order or manner that is deemed desirable. For example, the vehicle that lifts the target bin can be ordered to leave the train immediately, with the remaining vehicles of the train being ordered to close the gap left by the departed vehicle so as to maintain the insulating effect of the train.

Figs 4, 6, 7 and 8 illustrate a first embodiment of vehicle employed by the system, where a lifting arm 40 extends out from the body of the vehicle. Other embodiments of vehicles can also be employed, however. Fig 9 illustrates a vehicle 42 having an internal cavity 44 for receiving bins and side sections for containing driving and/or lifting means. Fig 10 shows a vehicle 46 configured to cover the cross section of only a single cell of the underlying grid. The driving means may be situated above the internal cavity 44 and/or at or within the vehicle's wheels. Note that each of the vehicles described herein may be configured to receive more than one bin at the time.

In all embodiments of vehicles, a skirt 48 may be arranged at the bottom of the vehicle in order to more effectively seal the gap between the vehicle and the top rails of the grid, thereby further reducing thermal losses when a vehicle is positioned above an open cell. Skirt 48 may be rigid, flexible or semi flexible. According to one aspect, brushes 50 may be arranged along the bottom of the skirt in order to provide direct contact with the rails. Fig 11 illustrates a train comprising vehicles of the type from Fig 10.

The trains of the vehicle may be maintained in their relative positions by a number of means. According to one aspect one or more onboard sensors 52 may be employed as shown in Fig 6. The sensors can according to one aspect communicate with the control system, such that the control system knows the precise location and speed of each vehicle of the system. The control system can then autonomously position the vehicles individually to form and move the train. Alternately the sensors can emit signals 54 that sense the presence of other vehicles of the train. Alternately, the vehicle may be equipped with physical coupling 56 illustrated schematically in Fig 4. Such coupling can be of any appropriate type of latch known in the art, including magnetic couplings and the like.

## Claims

1. A method for retrieving items from a storage system comprising a grid structure (10) of storage columns, arranged to accommodate a vertical stack of storage bins (12) arranged in storage cells (32) covered by removable covers (28), the method comprising the steps of:
a. providing a plurality of remotely-operated vehicles (16) arranged to move horizontally along rails at the top level of the grid structure, at least one of said vehicles comprising a device capable of lifting and replacing covers and at least one vehicle comprising a device capable of lifting and replacing bins, said vehicles further comprising positioning sensors for detecting the vehicles' position on the grid,
b. providing a computerized control system (30) in electronic communication with the vehicles, said control system arranged to receive position information signals from the vehicles, and further arranged to send movement and position commands to the vehicles, said control system yet further arranged to record the position of bins in the grid structure and the position of bins within a stack,
c. determining the position of a target bin (34) to be retrieved in a target storage cell (32), **characterized in that** the method comprises further the steps of:
d. instructing a plurality of vehicles to be proximately arranged in series and arranged to move in tandem and thus to form a train of vehicles adjacent to the target storage cell by transmitting movement commands to the vehicles,
e. instructing the train of vehicles to move over the target cell in tandem by transmitting further movement commands to the vehicles, said vehicles consecutively lifting the insulated cover, any non-target bins above the target bin (34), and finally the target bin,
f. instructing any vehicles of the train holding non-target bins to replace said non-target bins within the target storage cell,
g. instructing a vehicle of the train to place a cover over the target storage cell,
whereby a vehicle of the train is substantially at all times located above the open target storage column while the retrieval operation takes place.

2. The method according to claim 1, wherein the vehicles (16) further comprise sensors (52,54) for detecting the location of adjacent vehicles, causing the vehicles to communicate the location of said adjacent vehicles to the control system (30), said control system utilizing said position information of said adjacent vehicles in the formation and movement of the train.

3. The method according to claim 2, wherein the sensors (52,54) comprise at least one of laser, sonar and LiDar.

4. The method according to claim 1, wherein the grid structure (10) comprises one or more thermally insulated sections (26), and further wherein the covers (28) are insulated covers.

5. The method according to one of the preceding claims, wherein the vehicles of the train have a skirt (48) extending from a lower portion of the vehicles to at least approximate contact with the rails at the top level of the grid structure (10).

6. The method according to one of the preceding claims, wherein, after the target bin (36) has been retrieved, the train is commanded to reverse direction in order to consecutively replace non-target bins and the cover (28).

7. The method according to one of the preceding claims, wherein the train comprises a rear vehicle (36) having a new cover (38), and wherein, after the target bin (32) is retrieved, the train is commanded to continue in a forward direction, until the rear vehicle places the new cover above the cell.

8. The method according to one of the preceding claims wherein at least one of the storage cells (22) within the storage system is cooled to a temperature below the temperature of the vehicle's ambient temperature.

9. The method according to one of the preceding claims wherein cooled articles within the target bin (34) is transported automatically from the port to a cooled storage space by use of one or more conveyor belts.

10. The method according to one of the preceding claims wherein the number of vehicles (16) comprising the train is determined by the position of the target bin within the stack.

11. A storage system for storing and retrieving bins (12), the storage system comprising a grid structure (10) of storage columns, wherein the bins are arranged in vertical stacks in storage cells (22), the storage cells being covered by removable covers (28), wherein the system further comprises
a. a plurality of remotely-operated vehicles (16) arranged to move horizontally along rails at the top level of the grid structure, at least one of said vehicles comprising a device capable of lifting and replacing covers and at least one vehicle comprising a device capable of lifting and replacing bins, said vehicles further comprising positioning sensors for detecting the vehicles' position on the grid,
b. a computerized control system (30) in electronic communication with the vehicles, said control system arranged to receive position information signals from the vehicles, and further arranged to send movement and position commands to the vehicles, said control system yet further arranged to record the position of bins in the grid structure and the position of bins within a stack, **characterized in that**,
c. said control system is arranged to command a plurality of vehicles to be proximately arranged in series and arranged to move in tandem and thus to form a train of vehicles adjacent to a target storage cell (32), wherein
d. said control system is further arranged to command said train of vehicles to move in tandem over the target storage cell while sequentially removing the cover (28) and retrieving bins (12).

12. The storage system according to claim 11, wherein the vehicles are equipped with sensors (52,54) for sensing the position of the vehicle (16) and nearby vehicles (16) and arranged to communicate said position information to the control system (30).

13. The storage system according to claim 11 or 12, wherein the vehicles (16) are equipped with a skirt (48) extending from an underside of the vehicle to a top level of the grid structure.

## Patentansprüche

1. Verfahren zum Entnehmen von Gegenständen aus einem Lagersystem, das eine Gitterstruktur (10) von Lagersäulen umfasst, die so angeordnet ist, dass sie einen vertikalen Stapel von Lagerbehältern (12) aufnimmt, die in Lagerzellen (32) angeordnet sind, die mit abnehmbaren Abdeckungen (28) abgedeckt sind, wobei das Verfahren die folgenden Schritte umfasst:
a. Bereitstellen einer Vielzahl von fernbetätigten Fahrzeugen (16), die so angeordnet sind, dass sie sich horizontal auf Schienen auf der obersten Ebene der Gitterstruktur entlang bewegen, wobei wenigstens eines der Fahrzeuge eine Vorrichtung zum Anheben und Wiederabsetzen von Abdeckungen und wenigstens ein Fahrzeug mit einer Vorrichtung zum Anheben und Wiederabsetzen von Behältern umfasst, wobei die Fahrzeuge ferner Positionssensoren zum Erfassen der Position der Fahrzeuge auf dem Gitter umfassen,
b. Bereitstellen eines computergestützten Steuersystems (30) in elektronischer Verbindung mit den Fahrzeugen, wobei das Steuersystem dazu eingerichtet ist, um Positionsinformationssignale von den Fahrzeugen zu empfangen, und ferner dazu eingerichtet ist, Bewegungs- und Positionsbefehle an die Fahrzeuge zu senden, wobei das Steuersystem ferner auch noch dazu eingerichtet ist, die Position der Behälter in der Gitterstruktur und die Position der Behälter innerhalb eines Stapels aufzuzeichnen,
c. Bestimmen der Position eines Zielbehälters (34), der aus einer Ziellagerzelle (32) entnommen werden soll,
**dadurch gekennzeichnet, dass** das Verfahren ferner die Schritte umfasst:
d. Anweisen einer Vielzahl von Fahrzeugen, unmittelbar in Reihe und so angeordnet zu sein, dass sie sich gleichzeitig bewegen und somit einen Zug von Fahrzeugen neben der Ziellagerzelle bilden, indem Bewegungsbefehle an die Fahrzeuge übertragen werden,
e. Anweisen des Fahrzeugzuges, sich gleichzeitig über die Zielzelle zu bewegen, indem weitere Bewegungsbefehle an die Fahrzeuge übertragen werden, wobei die Fahrzeuge nacheinander die isolierte Abdeckung, alle Nicht-Zielbehälter über dem Zielbehälter (34) und schließlich den Zielbehälter anheben,
f. Anweisen von Fahrzeugen des Zuges, die Nicht-Zielbehälter halten, die Nicht-Zielbehälter innerhalb der Ziellagerzelle wieder abzusetzen,
g. Anweisen eines Fahrzeugs des Zuges, eine Abdeckung über die Ziellagerzelle zu legen,
wobei sich ein Fahrzeug des Zuges im Wesentlichen zu jeder Zeit oberhalb der offenen Ziellagersäule befindet, während der Entnahmevorgang stattfindet.

2. Verfahren nach Anspruch 1, wobei die Fahrzeuge (16) ferner Sensoren (52, 54) zum Erfassen des Standorts benachbarter Fahrzeuge umfassen, die bewirken, dass die Fahrzeuge den Standort der benachbarten Fahrzeuge an das Steuersystem (30) übermitteln, wobei das Steuersystem die Positionsinformationen der benachbarten Fahrzeuge bei der Bildung und Bewegung des Zuges verwendet.

3. Verfahren nach Anspruch 2, wobei die Sensoren (52, 54) wenigstens eines von Laser, Sonar und LiDar umfassen.

4. Verfahren nach Anspruch 1, wobei die Gitterstruktur (10) einen oder mehrere wärmeisolierte Abschnitte (26) umfasst, und ferner wobei die Abdeckungen (23) isolierte Abdeckungen sind.

5. Verfahren nach einem der vorstehenden Ansprüche, wobei die Fahrzeuge des Zuges eine Schürze (48) aufweisen, die sich von einem unteren Abschnitt der Fahrzeuge bis zu wenigstens annäherndem Kontakt mit den Schienen auf der obersten Ebene der Gitterstruktur (10) erstreckt.

6. Verfahren nach einem der vorhergehenden Ansprüche, wobei dem Zug nach der Entnahme des Zielbehälters (36) befohlen wird, die Richtung umzukehren, um nacheinander Nicht-Zielbehälter und die Abdeckung (28) wieder abzusetzen.

7. Verfahren nach einem der vorhergehenden Ansprüche, wobei der Zug ein hinteres Fahrzeug (36) mit einer neuen Abdeckung (38)umfasst und wobei, nachdem der Zielbehälter (32) entnommen wurde, dem Zug befohlen wird, in einer Vorwärtsrichtung fortzufahren, bis das hintere Fahrzeug die neue Abdeckung über der Zelle platziert.

8. Verfahren nach einem der vorhergehenden Ansprüche, wobei wenigstens eine der Lagerzellen (22) innerhalb des Lagersystems auf eine Temperatur unterhalb der Temperatur der Umgebungstemperatur des Fahrzeugs gekühlt wird.

9. Verfahren nach einem der vorhergehenden Ansprüche, wobei gekühlte Artikel innerhalb des Zielbehälters (34) mittels eines oder mehrerer Förderbänder automatisch von der Öffnung zu einem gekühlten Lagerraum transportiert werden.

10. Verfahren nach einem der vorhergehenden Ansprüche, wobei die Anzahl der den Zug bildenden Fahrzeuge (16) durch die Position des Zielbehälters innerhalb des Stapels bestimmt wird.

11. Lagersystem zum Lagern und Entnehmen von Behältern (12), wobei das Lagersystem eine Gitterstruktur (10) von Lagersäulen umfasst, wobei die Behälter in vertikalen Stapeln in Lagerzellen (22) angeordnet sind, wobei die Lagerzellen mit abnehmbaren Abdeckungen (28) abgedeckt sind, wobei das System ferner umfasst:
a. eine Vielzahl von fernbetätigten Fahrzeugen (16), die so angeordnet sind, dass sie sich horizontal auf Schienen auf der obersten Ebene der Gitterstruktur entlang bewegen, wobei wenigstens eines der Fahrzeuge eine Vorrichtung zum Anheben und Ersetzen von Abdeckungen und wenigstens ein Fahrzeug mit einer Vorrichtung zum Anheben und Ersetzen von Behältern umfasst, wobei die Fahrzeuge ferner Positionssensoren zum Erfassen der Position der Fahrzeuge auf dem Gitter umfassen,
b. ein computergestütztes Steuersystem (30) in elektronischer Verbindung mit den Fahrzeugen, wobei das Steuersystem dazu eingerichtet ist, Positionsinformationssignale von den Fahrzeugen zu empfangen, und ferner dazu eingerichtet ist, Bewegungs- und Positionsbefehle an die Fahrzeuge zu senden, wobei das Steuersystem ferner auch noch dazu eingerichtet ist, die Position der Behälter in der Gitterstruktur und die Position der Behälter innerhalb eines Stapels aufzuzeichnen, **dadurch gekennzeichnet, dass**
c. das Steuersystem dazu eingerichtet ist, eine Vielzahl von Fahrzeugen anzuweisen, unmittelbar in Reihe und so angeordnet zu sein, dass sie sich gleichzeitig bewegen und somit einen Zug von Fahrzeugen neben einer Ziellagerzelle (32) bilden, wobei
d. das Steuersystem ferner dazu eingerichtet ist, den Fahrzeugzug anzuweisen, sich gleichzeitig über die Ziellagerzelle zu bewegen, während nacheinander die Abdeckung (28) entfernt und Behälter (12) entnommen werden.

12. Lagersystem nach Anspruch 11, wobei die Fahrzeuge mit Sensoren (52, 54) zum Erfassen der Position des Fahrzeugs (16) und benachbarter Fahrzeuge (16) ausgestattet und dazu eingerichtet sind, die Positionsinformationen an das Steuersystem (30) zu übermitteln.

13. Lagersystem nach Anspruch 11 oder 12, wobei die Fahrzeuge (16) mit einer Schürze (48) ausgestattet sind, die sich von einer Unterseite des Fahrzeugs bis zu einer obersten Ebene der Gitterstruktur erstreckt.

## Revendications

1. Procédé pour récupérer des articles depuis un système de stockage comprenant une structure de grille (10) de colonnes de stockage, agencée pour loger une pile verticale de bacs de stockage (12) agencés dans des compartiments de stockage (32) couverts par des couvercles (28) amovibles, le procédé comprenant les étapes de :
a. fourniture d'une pluralité de véhicules (16) télécommandés agencés pour se déplacer à l'horizontale le long de rails au niveau supérieur de la structure de grille, au moins l'un desdits véhicules comprenant un dispositif capable de lever et de replacer des couvercles, et au moins un véhicule comprenant un dispositif capable de lever et de replacer des bacs, lesdits véhicules comprenant en outre des capteurs de positionnement pour détecter la position des véhicules sur la grille,
b. fourniture d'un système de commande (30) informatisé en communication électronique avec les véhicules, ledit système de commande étant agencé pour recevoir des signaux d'information de position en provenance des véhicules, et agencé en outre pour envoyer des ordres de déplacement et de position aux véhicules, ledit système de commande étant encore en outre agencé pour enregistrer la position de bacs dans la structure de grille et la position de bacs au sein d'une pile,
c. détermination d'une position d'un bac cible (34) à récupérer dans un compartiment de stockage (32) cible, **caractérisé en ce que** le procédé comprend en outre les étapes de :
d. instruction à une pluralité de véhicules d'être agencés à proximité en série et agencés pour se déplacer en tandem et pour former ainsi un train de véhicules adjacents au compartiment de stockage cible en transmettant des ordres de déplacement aux véhicules,
e. instruction au train de véhicules de se déplacer sur le compartiment cible en tandem en transmettant des ordres de déplacement supplémentaires aux véhicules, lesdits véhicules levant consécutivement le couvercle isolé, tout bac non-cible au-dessus du bac cible (34), et enfin le bac cible,
f. instruction à tout véhicule du train retenant des bacs non-cibles de replacer lesdits bacs non-cibles au sein du compartiment de stockage cible,
g. instruction à un véhicule du train de placer un couvercle sur le compartiment de stockage cible,
moyennant quoi un véhicule du train est situé sensiblement à tout moment au-dessus de la colonne de stockage cible ouverte tandis que l'opération de récupération a lieu.

2. Procédé selon la revendication 1, dans lequel les véhicules (16) comprennent en outre des capteurs (52, 54) pour détecter l'emplacement de véhicules adjacents, amenant les véhicules à communiquer l'emplacement desdits véhicules adjacents au système de commande (30), ledit système de commande employant lesdites informations de position desdits véhicules adjacents dans la formation et le déplacement du train.

3. Procédé selon la revendication 2, dans lequel les capteurs (52, 54) comprennent au moins l'un parmi un laser, un sonar et un lidar.

4. Procédé selon la revendication 1, dans lequel la structure de grille (10) comprend une ou plusieurs sections isolées thermiquement (26), et dans lequel en outre les couvercles (28) sont des couvercles isolés.

5. Procédé selon l'une des revendications précédentes, dans lequel les véhicules du train ont une bavette (48) s'étendant depuis une portion inférieure des véhicules pour approcher au moins un contact avec les rails au niveau supérieur de la structure de grille (10).

6. Procédé selon l'une des revendications précédentes, dans lequel, après que le bac cible (36) a été récupéré, le train reçoit l'ordre de faire marche arrière afin de replacer consécutivement des bacs non-cibles et le couvercle (28).

7. Procédé selon l'une des revendications précédentes, dans lequel le train comprend un véhicule arrière (36) ayant un nouveau couvercle (38), et dans lequel, après que le bac (32) cible a été récupéré, le train reçoit l'ordre de poursuivre en marche avant, jusqu'à ce que le véhicule arrière place le nouveau couvercle au-dessus du compartiment.

8. Procédé selon l'une des revendications précédentes, dans lequel au moins l'un des compartiments de stockage (22) au sein du système de stockage est refroidi à une température en dessous de la température ambiante du véhicule.

9. Procédé selon l'une des revendications précédentes, dans lequel des articles refroidis au sein du bac cible (34) sont transportés automatiquement du port à un espace de stockage refroidi grâce à l'utilisation d'une ou de plusieurs courroies transporteuses.

10. Procédé selon l'une des revendications précédentes, dans lequel le nombre de véhicules (16) composant le train est déterminé par la position du bac cible au sein de la pile.

11. Système de stockage pour stocker et récupérer des bacs (12), le système de stockage comprenant une structure de grille (10) de colonnes de stockage, dans lequel les bacs sont agencés en piles verticales dans des compartiments de stockage (22), les compartiments de stockage étant couverts de couvercles (28) amovibles, dans lequel le système comprend en outre
a. une pluralité de véhicules (16) télécommandés agencés pour se déplacer à l'horizontale le long de rails au niveau supérieur de la structure de grille, au moins l'un desdits véhicules comprenant un dispositif capable de lever et de replacer des couvercles et au moins un véhicule comprenant un dispositif capable de lever et de replacer des bacs, lesdits véhicules comprenant en outre des capteurs de positionnement pour détecter la position des véhicules sur la grille,
b. un système de commande (30) informatisé en communication électronique avec les véhicules, ledit système de commande étant agencé pour recevoir des signaux d'information de position en provenance des véhicules, et agencé en outre pour envoyer des ordres de déplacement et de position aux véhicules, ledit système de commande étant encore en outre agencé pour enregistrer la position de bacs dans la structure de grille et la position de bacs au sein d'une pile, **caractérisé en ce que**,
c. ledit système de commande est agencé pour ordonner à une pluralité de véhicules d'être agencés à proximité en série et agencés pour se déplacer en tandem et former ainsi un train de véhicules adjacents à un compartiment de stockage (32) cible, dans lequel
d. ledit système de commande est en outre agencé pour ordonner audit train de véhicules de se déplacer en tandem sur le compartiment de stockage cible tout en enlevant séquentiellement le couvercle (28) et en récupérant des bacs (12).

12. Système de stockage selon la revendication 11, dans lequel les véhicules sont équipés de capteurs (52, 54) pour détecter la position du véhicule (16) et de véhicules (16) proches et agencés pour communiquer lesdites informations de position au système de commande (30).

13. Système de stockage selon la revendication 11 ou 12, dans lequel les véhicules (16) sont équipés d'une bavette (48) s'étendant depuis une face inférieure du véhicule jusqu'à un niveau supérieur de la structure de grille.
